Europäisches Patentamt

(19) European Patent Office

Office européen des brevets

(11) Publication number: **0 071 308**
**B1**

⑫ **· EUROPEAN PATENT SPECIFICATION**

(45) Date of publication of patent specification: 14.05.86

(51) Int. Cl.⁴: **D 06 F 37/30, H 02 P 5/40**

(21) Application number: 82200932.0

(22) Date of filing: 22.07.82

(54) **Drum speed control system for a washing machine.**

(30) Priority: 31.07.81 GB 8123480

(43) Date of publication of application:
09.02.83 Bulletin 83/06

(45) Publication of the grant of the patent:
14.05.86 Bulletin 86/20

(84) Designated Contracting States:
DE FR GB IT

(56) References cited:
DE-A-2 128 602
DE-A-2 939 340
GB-A-1 266 691
US-A-3 152 462

(73) Proprietor: PHILIPS ELECTRONIC AND
ASSOCIATED INDUSTRIES LIMITED
Arundel Great Court 8 Arundel Street
London WC2R 3DT (GB)
㊥ GB

(73) Proprietor: N.V. Philips' Gloeilampenfabrieken
Groenewoudseweg 1
NL-5621 BA Eindhoven (NL)
㊥ DE FR IT

(72) Inventor: Seth, Siya Vallabh
C/O MULLARD LIMITED New Road
Mitcham Surrey CR4 4XY (GB)
Inventor: Keulemans, Alexander Hendrik
Francis
13 Palmer Close
Horley Surrey (GB)

(74) Representative: Boxall, Robin John et al
Philips Electronic and Associated Ind. Ltd.
Patent Department Mullard House Torrington
Place
London WC1E 7HD (GB)

Courier Press, Leamington Spa, England.

# 0 071 308

## Description

This invention relates to a motor speed control arrangement for a washing machine of the type having a laundry drum which is rotatable about a substantially horizontal axis by an electric motor which is provided with a tachogenerator having an a.c. output signal which is proportional to the speed of the motor and, hence, of the drum, the arrangement being arranged for connection to said motor and tachogenerator to form a speed control loop whereby the motor speed may be automatically brought to a wash speed at which the laundry articles may be washed and then to a higher (spin) speed at which the articles may be at least partially spin-dried, the control arrangement being provided with means for causing the motor to drive the drum relatively slowly through an intermediate distribute speed range to enable the articles to be distributed evenly around the drum to a "given speed" at which the articles have become retained in a substantially fixed position relative to the drum by centrifugal force before the control arrangement causes the motor speed to increase to the required spin speed.

It is known in automatically controlled washing machines that if, at the end of a wash cycle, the free washing liquid is drawn off and then the speed is increased to the spin speed for spin-drying the articles of the laundry, the drum sometimes develops an uneven bumping action and that this can lead to damage to the machine. The reason for the bumping is that when the free liquid is withdrawn from the drum, the articles mass together in the lowest portion of the drum. As the speed is increased, the clothes are tumbled in a random manner until a critical speed is reached where the centrifugal force on the articles due to the rotation is equal to the force of gravity. Thereafter the articles remain in a substantially fixed position in the drum until the speed is reduced to below the critical speed. In many cases, if the speed is increased rapidly from the wash speed to the spin the articles do not distribute themselves evenly around the drum before the critical speed is reached. As a result, the drum load is out of balance and, as the speed increases further, this unbalanced load can cause vibration and bumping of the drum and possible damage to the suspension means for the drum.

Accordingly it is known to provide an intermediate distribute cycle in which the drum speed is slowly increased from the wash speed to the critical speed. This slow increase in speed, usually referred to as the distribute speed ramp, or simply as the distribute ramp, allows the articles sufficient time to distribute themselves relatively evenly around the drum before the critical speed is reached. See, for example, GB Patent No. 1,266,691.

The laundry load may, however, comprise or include a large single article such as a bath towel or blanket and this may become tangled, or perhaps even knotted, during the washing cycle. As a result, this article may not be able to distribute itself evenly round the drum even if the critical speed is approached fairly slowly. Accordingly it is known to provide a mechanical out of balance test before increasing the drum speed to the spin value. Such tests are effected by detecting the mechanical movement of the drum, in a direction radially outwards of the drum axis, which results from an unbalanced load. If such an out of balance is detected, the motor is switched off to prevent damage to the drum and an alarm may also be given to warn the user of the machine that the load needs to be redistributed.

Such a mechanical system, however, has several disadvantages. The mechanical means has to be accurately adjusted on every machine as a compromise between a tolerable small drum displacement which would not cause any damage and a slightly larger displacement which even if it may not lead to any damage, nevertheless causes an unpleasant bumping sound which may worry the machine user. Further the provision, assembly, and adjustment of the mechanical means results in a noticeably increased selling price for the washing machine. Also, of course, unbalanced drum conditions must in fact produce adverse movement of the drum for the movement to be detected. Such movement can lead to the reduction of the life of the drum suspension means.

It is an object of the invention at least to mitigate the abovementioned disadvantages.

According to one aspect of the invention, there is provided a motor speed control arrangement of the type defined in the opening paragraph hereof, characterised in that the arangement includes means for maintaining said given speed for a given period, for monitoring the actual motor speed, as represented by the tachogenerator output signal, during this period, and for giving an output signal if the tachogenerator output signal reveals that the motor speed changes during this period by more than a predetermined amount, which change in speed is indicative of an unbalanced distribution of the laundry articles around the drum.

It has now been recognized that an out of balance load can be detected to any required degree of sensitivity by detecting any change in speed of the motor whilst the control arrangement is arranged to try and maintain the speed constant at said given speed for a given period.

The principal advantage of such an arrangement is that the detection of any drum out of balance is effected by the arrangement itself and, since means for doing this can be provided in a monolithic integrated circuit together with the remainder of the arrangement, there need be negligible increase in the cost of the arrangement.

Another advantage over any mechanical system is that the required sensitivity of the detection is built into the speed detection circuit and is hence constant irrespective of the particular mechanical arrangement of the drum and its suspension and also of variation in mechanical tolerances from machine to machine.

Whilst the output signal may be used to switch off the washing machine and so prevent any damage

2

thereto, such switching off means that the user has to open the machine, readjust the load, and then possibly reset the washing programme. One of the objects of an automatic washing machine programme is that the user can leave the washing machine unattended during the programme. Thus the user may return to find that the programme has not been completed, which may be a considerable nuisance. In order to mitigate this problem it is also known to provide a system of one or more counterbalance weights which automatically move to offset the effects of an unevenly-balanced laundry load. Again, the provision of such a mechanical system is relatively costly.

The output signal may advantageously be used to cause the control arrangement to reduce the motor speed to the wash speed and then to pass through the intermediate speed range again, whereafter the speed is again monitored. This means that the washing machine automatically recycles itself and, if necessary, repeats the cycle until the out of balance test produces no output signal, whereafter the machine continues safely to the spin cycle. This avoids the need for the user to monitor the operation of the machine and the programme will be completed because any out of balance of the drum has been detected and remedied.

The output signal may preferably cause the motor to be stopped for a short time before the speed is taken back through the distribute range. This has the advantage that the articles of the load can fall to the lowest portion of the drum and then to be tumbled to a new random distribution arrangement while the speed is increased from zero to the given speed.

The invention also relates to a method of controlling the motor speed of a washing machine of the type having a laundry drum which is rotatable about a substantially horizontal axis by said motor which is provided with a tachogenerator having an output signal which is proportional to the speed of the motor and, hence, of the drum, a speed control arrangement being connected to said motor and tachogenerator to form a speed control loop whereby the motor speed may be automatically brought to a wash speed at which laundry articles in the drum may be washed and then to a higher (spin) speed at which the articles may be at least partially spin-dried, the method including the steps of driving the motor relatively slowly from the wash speed through an intermediate distribute speed range to enable the articles to be distributed relatively evenly around the drum, to a given speed at which the articles have become retained in a substantially fixed position relative to the drum by centrifugal force and subsequently increasing the motor speed to the spin speed, characterised in that the method further includes the steps of maintaining the motor speed at the said given speed for a given period, monitoring the motor speed, as represented by the tachogenerator output signal, during this period, detecting whether the tachogenerator output signal reveals that the motor speed changes during this period by a given amount representative of unevenly distributed articles around the drum, and preventing the motor from increasing its speed to the spin speed if such a motor speed change is detected. In general, an out of balance load causes the drum speed to vary above and below the given speed in a cyclic manner, the drop in speed below the given speed typically being greater than the increase above the given speed. For this reason, the drop in speed is the more readily detected.

An embodiment of the invention will now be described with reference to the accompanying drawings, of which

Figure 1 is a block schematic circuit of a motor speed control arrangement, and

Figure 2 is a block schematic circuit of means for controlling the distribute speed and for performing the out of balance test.

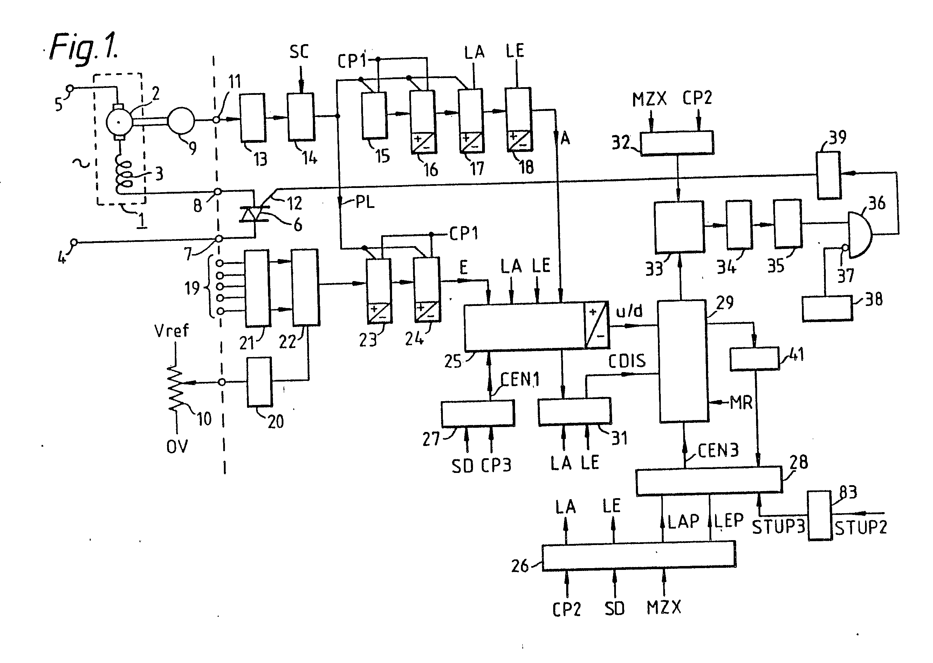

Referring now to Figure 1 of the drawings, a motor 1 to be controlled by the control arrangement is arranged, in a manner not shown, to rotate the drum of a washing and/or spin drying machine and comprises a rotor 2 and a series stator winding 3. In operation, an a.c. mains voltage supply is connected to terminals 4 and 5 and the energy supplied to the motor from the mains supply is controlled by a semiconductor controlled switch 6 connected in series with the motor via output terminals 7 and 8 of the control system. A tachogenerator 9 is coupled to the rotor 2 so as to rotate therewith and to provide an a.c. output signal at terminal 11 whose frequency is directly proportional to the rotational speed of motor 1. Terminal 11 is the control arrangement input terminal.

Motor 1 may be a d.c. motor, in which case switch 6 could be a unidirectional thyristor triode which is fired via its control electrode 12 only in those alternate half cycles of the mains voltage supply having a polarity corresponding to that required by the motor. Preferably, however, the switch 6 is a bidirectional thyristor (triac) as shown which is fired by a firing pulse on control electrode 12 once in every half cycle of the a.c. mains voltage supply. In this case a d.c. motor may be used by rectifying the power supplied via switch 6 by a rectifier bridge circuit. Preferably, however, the motor is an a.c. motor.

Terminal 11 is connected to the input of a signal processor 13 of the type which generates a single short-duration output pulse in every cycle of the output signal of tachogenerator 9. The output signal from processor 13 thus comprises a series of short pulses which have a repetition rate equal to the frequency of the tachogenerator signal. These pulses are fed to a divider 14 which is controlled via a speed control input SC to divide the pulses by a factor (e.g. 1, 8, or 16) which depends upon the required target speed, as will be explained hereinafter. The output pulses PL from divider 14 are fed to an up-counter 15 together with clock pulses CP1 which have a repetition rate (e.g. 2.5 kHz) considerably higher than the highest tachogenerator frequency.

The control arrangement is a digital system using synchronous logic. Counter 15 is therefore of the type which ouputs and clears its contents on receipt of a PL pulse and then starts counting the incoming clock pulses CP1 at the end of that pulse. If we assume that the division ratio of divider 14 is set at unity then, in general, the maximum count PM' reached by counter 15 in each cycle of the tachogenerator signal is directly proportional to the period of that signal and, hence, is inversely proportional to the speed of the motor and drum during that cycle. We have found, however, that there is no reason to retain this proportionality when the motor is going very slowly, for example during a starting up period, since it is self-evident that if the value of PM' is greater than a given very high value then a considerable increase of speed is needed and so a relatively coarse control can be used at this stage. This has the advantage that the capacity of the counter can be determined purely on the basis of the degree of "fineness" of control that is required. We have found that a seven-bit digital counter (i.e. a maximum count value of 127) gives an adequately fine control in practice.

At the next PL pulse, the contents of counter 15 are fed in parallel into a down-counter 16 and then cleared from counter 15. Thus during the next cycle of the tachogenerator output frequency, counter 15 counts up to a new value PM (which may or may not be equal to the value PM') and counter 16 simultaneously down-counts by PM to a value $A=(PM'-PM)$ which may be positive, negative, or zero according to whether the motor has respectively increased, decreased, or not changed its speed since the previous cycle represented by PM'. Thus the value of A is a function of the acceleration of the motor. At the end of the second cycle, that is to say on arrival of the third PL pulse, the value $A=(PM'-PM)$ and its sign is latched into a first store 17. Thus a respective acceleration function A is produced in the first store 17 for every cycle of the tachogenerator output signal frequency. This acceleration term A and an error term E (to be described) are used at the beginning of each half cycle of the mains voltage supply to compute the required firing angle during that half cycle. To ensure that the latest values for A and E are used, a pulse LE is generated a short period after each mains voltage supply zero crossing and this pulse latches the currently-available acceleration term A into a second store 18.

Modern washing machines cater for several different drum speeds. For example these may be selected from three different wash or rinse speeds, the aforesaid given speed, and up to four spin speeds with perhaps an additional "variable spin" speed range. Also, of course, there is the zero speed for the stop signal. The selection of the required speed (target speed) may be made manually or by an automatic program control unit and it is assumed that these target speeds are received as a parallel five-bit code on target speed signal input terminals 19. These speed signals are decoded into the specific speed functions required in a 5-bit ROM (read-only memory) 21 and each of the speeds is coded in a second ROM 22 into a 7-bit target period PT which is the period of the tachogenerator output frequency when the motor is running at the target speed. The value of PT is represented by the number of clock pulses that would occur during the period concerned using the same clock frequency as that used to measure the value PM, having regard to the appropriate division ratio of divider 14. Typical division ratios and values of PT for various drum speeds will now be described for a particular embodiment of a washing machine in which the tachogenerator had four pole pairs, its output frequency thus being four times the rotational speed of the motor. The motor was coupled to the drum in such a manner that one revolution of the drum required 12.5 revolutions of the motor. Table I shows typical drum speeds, in revolutions per minute (rpm), over the range used in practice. Not all these speeds are necessarily used in any one washing machine, of course. Table I also shows the corresponding motor speeds, tachogenerator frequencies, the chosen divide ratio for divider 14, and the values of the target periods PT determined on the basis of a 2.5 kHz clock pulse rate, i.e. each PT unit represents 0.4 mS.

TABLE I

| | Drum speed (rpm) | Motor speed (rpm) | Tacho F. (Hz) | Divide ratio | PT (units) |
|---|---|---|---|---|---|
| Wash 1 | 25 | 312 | 21 | 1 | 120 |
| Wash 2 | 35 | 437.5 | 29 | 1 | 86 |
| Wash 3 | 52 | 650 | 43 | 1 | 58 |
| Out of balance test | 82 | 1025 | 68 | 1 | 37 |
| Spin Var. | 400 | 5000 | 333 | 16 | 120 |
| Spin 1 | 500 | 6250 | 417 | 16 | 96 |
| Spin 2 | 700 | 8750 | 583 | 16 | 69 |
| Spin 3 | 900 | 11250 | 750 | 16 | 55 |
| Spin 4 | 1100 | 13750 | 917 | 16 | 44 |

In addition to Wash speeds 1 to 3, out of balance test speed, and Spin speeds 1 to 4, Table I also shows the minimum speed (Spin Var.) of a variable speed range which may, in some washing machines, be adjusted manually. The tachogenerator frequency is shown in two ranges, namely 21 to 68 Hz and 333 to 917 Hz. The frequencies in these two ranges are divided by unity and 16 respectively, and hence provide a maximum period PT of 120 units for each case. In some cases, intermediate drum speed indications may be used, in which case divider 14 would be set to divide by eight so that the longest period PT is again 120 units. The reason for such division is two-fold. Firstly, the overall drum speed range can be of the order of fifty to one (44:1 in the example given in Table I) and it would be difficult to maintain a comparably close speed control over the whole of this wide range. Secondly, the maximum value of 120 for PT can be represented as a 7-bit binary number and, hence, limits to a reasonable level the required capacities of the counters and stores used.

It is also to be noted from Table I that the fastest speed required is represented by a PT value of 37, that is to say that the overall speed range of 44:1 has been reduced to 120:37—i.e. to less than 3-1/4:1.

Each PL pulse sets the appropriate selected value of PT in a down-counter 23 which, under the control of 2.5 kHz clock pulses CP1, then down-counts from PT by the value PM between that PL pulse and the next PL pulse to produce an error term E=PT−PM. The next PL pulse latches the value (PT−PM) with its appropriate sign into a store 24 which stores the error term E. Thus the magnitude of this term depends upon the change in speed required to achieve the target speed and its sign denotes whether a speed increase (−) or decrease (+) is required.

As explained above, an LE (load error) pulse is generated a short period (e.g. 100 µS) after each mains crossing. This pulse is used as the signal to start computing and combining functions derived from the acceleration and error terms A and E respectively to produce an expression F1(PM′−PM)+F2(PT−PM).

This LE pulse, having a duration of 12.5 µS for example, causes the error term E, together with its sign, to be passed in parallel into an up/down error counter 25. Simultaneously, as described above, the application of the same LE pulse to store 18 latches the corresponding value of the acceleration term A into store 18.

In order to derive the function F2(PT−PM), the value of (PT−PM) is truncated to a relatively low predetermined value if (PT−PM) exceeds this value. In some cases, the predetermined value may be selected in dependence upon the selected target speed. The reason for such truncation is that experiments have shown that only a low value error function is needed to give a very smooth and accurate speed control. In a practical embodiment of the arrangement being described, it was found that all the varying requirements for drum speeds and acceleration rates could be met if the value of F2(PT−PM) never exceeded a few units. Thus, for example, if (PT−PM) has the value 0, 1 or 2, then this value is passed to error counter 25. If the value exceeds 2, however, it is truncated to 2. The truncation level that is selected depends upon several factors which will vary from machine to machine and from manufacturer to manufacturer. The selected level depends, for example, upon the motor characteristics and power, on the speed range, on the load variation to be covered, on the tachogenerator output frequency relative to the motor speed, on the clock rate used to measure the period PM, on the rate at which the firing angle of the switch is controlled (e.g. once per cycle or per half cycle), and on the size of the steps which control the firing angle. In the practical embodiment, the firing angle was controlled in every half cycle of the mains

5

voltage supply, the control phase angle step size was 0.45° (i.e. 400 steps per 180°), and the required drum speed range extended from Wash 2 (35 rpm) to Spin 4 (1100 rpm). With some motors and speed ranges, it has been necessary to use a different truncation level for (PT−PM) and in some embodiments three different truncation levels were used in dependence upon which of three predetermined speed ranges included the particular target speed required. In one case, optimum control conditions were achieved in a more complex manner by truncating (PT−PM) to 4 and then halving to the nearest upper unit if (PT−PM) were equal to 2, 3, or 4. thus the values in this case were:—

| (PT−PM) | 0 | 1 | 2 | 3 | 4 |
|---|---|---|---|---|---|
| F2(PT−PM) | 0 | 1 | 1 | 2 | 2 |

The way in which the less complex truncation is achieved in this embodiment will now be described, whereafter it will be evident to those skilled in the art that more complex truncations can be achieved by, for example, altering relative clock rates.

The sequencing and timing of the various control operations is controlled by an error load control unit 26 provided with parallel target speed decode information from ROM 21 at a group of speed decode inputs SD, with a 40 kHz clock pulse input CP2, and with mains supply zero crossing instants at an input MZX. The MZX input signal comprises a 12.5 µS pulse which is provided each time the mains supply voltage passes through zero, i.e. at the beginning of every half cycle of the supply frequency. Means for deriving such zero crossing pulses are very well known in the art and need no further description herein.

Unit 26 has four pulse outputs respectively referred to as LE, LEP, LA and LAP, the first of which (LE) has already been referred to and follows shortly after each mains zero crossing pulse received on input MZX. This LE pulse is followed by an LEP (load error period) pulse the length of which determines the truncation level for (PT−PM). This is followed by a short LA (load acceleration) pulse which, in turn, is followed by an LAP (load acceleration period) pulse having a length which is determined by the target speed setting received at speed decode input SD. Thus unit 26 is a simple sequencing circuit.

The count rate of error counter 25 is controlled by 80 kHz clock pulses CP3 via a count enable lead CEN1 from a variable divider 27 the division ratio (1, 4, 8, or 16) of which is controlled in dependence upon the required target speed *via* a speed decode input SD.

Outputs LEP and LAP of unit 26 are fed to control inputs of a firing angle control decoder 28 having a CEN3 (count enable) output connected to an input of a firing angle up/down counter 29. Error counter 25 is provided with an all-zeros detector 31 which gives a "count discontinue" signal on lead CDIS to counter 29 each time counter 25 counts up or down to the all-zeros state. Error counter 25 counts up or down (depending upon the sign from counter 24) by the value (PT−PM), at the 80 kHz rate of clock pulses CP3 if the division ratio of divider 27 is equal to unity, until it reaches the all-zeros state. Simultaneously, counter 29 is enabled by an enabling pulse on lead CEN3 derived from the load error pulse LEP input to decoder 28. Counter 29 counts at the CP3 clock pulse rate (80 kHz), the direction of count being controlled by the up/down (+/− sign) signal from counter 25 on lead u/d.

The abovementioned truncation of the value of (PT−PM) to 2 or less will now be described. If (PT−PM) is zero, then the all-zeros detector 31 responds to the zero state of counter 25 as soon as an input LE clearing pulse disappears. The resulting signal on lead CDIS inhibits counter 29 which, therefore, does not change its existing count state (hereinafter referred to as C'). In a similar fashion, if (PT−PM) is equal to 1 or 2, then the stored value C' in counter 29 is correspondingly incremented or decremented by 1 or 2 respectively before the detector 31 inhibits the count. The length of the enabling pulse on CEN3 is determined by the length of the load error period pulse LEP and this is set at such a length in the present example that only two pulses at the CP3 rate can be fed to, and counted by, counter 29 in this period. Thus if the value of (PT−PM) is greater than two, no more than two pulses can be counted by counter 29 even though error counter 25 may still continue counting to zero.

As explained above, the length of the LEP pulse may have different values to meet different circumstances and may, if required, be made dependent upon the required target speed setting indicated on the SD inputs to the control unit 26.

The LEP pulse is followed by an LA pulse from control unit 26 and, *inter alia*, this pulse clears the detector 31, clears the contents of store 17 (to ensure that the value of (PM'−PM) therein which is stored in store 18 by the preceding LEP pulse cannot be used again), and loads the value of (PM'−PM) and its sign stored in store 18 into the error counter 25.

In a particular practical embodiment of a washing machine including a control arrangement according to the invention, the arrangement was so arranged that the value of (PM'−PM) was truncated to 4 if it exceeded 4 and was then multiplied by a factor of 4, 8, or 16 selected in accordance with the particular target speed concerned. Table II shows the drum speeds concerned divided into three speed groups and the selected values for the function F1(PM'−PM).

6

**0 071 308**

TABLE II

| Speed group | Target speed | (PM'−PM) (+ or −) | (PM'−PM) truncated to | Multiplying factor | F1(PM'−PM) |
|---|---|---|---|---|---|
| I | Wash 2<br>Wash 3 | 0<br>1<br>2<br>3<br>4 | 0<br>1<br>2<br>3<br>4 | 4 | 0<br>4<br>8<br>12<br>16 |
| II | Out of balance test<br>Spin 1 | 0<br>1<br>2<br>3<br>4 | 0<br>1<br>2<br>3<br>4 | 8 | 0<br>8<br>16<br>24<br>32 |
| III | Spin 4 | 0<br>1<br>2<br>3<br>4 | 0<br>1<br>2<br>3<br>4 | 16 | 0<br>16<br>32<br>48<br>64 |

It can be seen from Table II that the value of the function F1(PM'−PM) varies from a relatively low number in the case where both the current acceleration and the target speed are relatively low, to a relatively high number for the highest target speed where the current acceleration is relatively large. Thus the degree of control is proportional to the target speed as well as to the current acceleration. Thus if we take an example where the motor is running precisely at the required target speed in any speed group, the value of F1(PM'−PM) is zero. If the speed then changes very slightly, then (PM'−PM) will become 1 and a speed correction factor of 4, 8, or 16 will be applied in the control loop, depending upon the speed group concerned, such that the higher the target speed and acceleration, the greater the correction factor that needs to be applied in order to provide a corresponding correction rate over the range.

The way in which the function F1(PM'−PM) as defined by Table II is derived in the embodiment shown in Figure 1 will now be described.

After the termination of "load acceleration" pulse LA, the error load control unit generates an LAP (load acceleration period) pulse having a period which is partly determined by the truncation level (4 in this case) and also by the speed group (Table II) and, hence, the multiplying factor. To deal with the multiplying factor· first, this is achieved by the variable divider 27 which reduces the count rate of error counter 25 by 4, 8, or 16 in dependence upon the speed group concerned as defined by the speed decode input SD in accordance with Table II. Thus error counter 25 counts at 20 kKz, 10 kHz, and 5 kHz in response to the selection of a target speed in speed groups I, II, and III respectively of Table II. The period of pulse LAP is the product of the multiplication factor, the truncation level (4), and the period of one cycle of the 80 kHz clock pulse CP.

Thus if we first take an exapmle where the value of (PM'−PM) is equal to or greater than 4 and the required target speed is in group 2 (multiplication factor 8), then pulse CEN3 is only of sufficient length to enable counter 29 to count 32 pulses of the 80 kHz input CP3 clock pulses. During this period, counter 25 is counting up or down at the rate of 10 kHz and, since the value of (PM'−PM) is greater than 4, it will not have reached its zero count and, hence, detector 31 will not have operated. The value of F1(PM'−PM) is thus 32 and firing angle counter 29 will have counted up or down by this number.

If now we take an example where the value of F1(PM'−PM) is 3 and the required speed group is III, then divider 27 is set to divide the CP3 clock rate by 16 so that error counter 25 counts up or down by 3 at the rate of 5 kHz. Since counter 29 is simultaneously counting at the 80 kHz rate, it will have counted 48 in the appropriate direction during the same period, at the end of which the error counter 25 has reached the all-zeros state and detector 31 immediately inhibits counter 29 so that it cannot further change its count value.

It has been assumed that the count value in firing angle counter before computing and combining the acceleration and error term is C'. Thus the new count value C in firing angle counter 29 is now

$$C=C'+F1(PM'-PM)+F2(PT-PM),$$

this being the equation of the control loop. The value of C and C' are directly proportional to the respective firing angles of the switch 6 and the equation holds equally true if C and C' are the actual firing angles but the functions F1 and F2 would be different from those described above.

From the above values for the clock pulse frequencies, and the maximum values for PT and PM (limited to at most 127 by the use of a 7-bit counter 15), it will be appreciated that the value for C is calculated in the

7

first millisecond of each half cycle of the a.c. mains voltage supply. The value of each unit of PM and PT is, for example, equal to 1/400 of a half cycle of the mains voltage supply, that is to say a firing angle step of 180/400=0.45°. To relate the value C to an actual firing point in the half cycle for the switch 6, the mains zero crossing signals MZX are applied as reset and start pulses to an up-counter 32 which counts at the 40 kHz rate due to clock pulses CP2. If the mains supply frequency is 50 Hz, then counter 32 counts up from 0 to 400 in each half cycle. The count value of counter 32 is fed in parallel on a continuous basis to one input of a digital comparator 33 and the value of C in counter 29 is fed to the other input of comparator 33. When the count value in counter 32 reaches the value C, comparator 33 provides a short output pulse signal which is latched by a latch circuit 34 which operates a 100 μS pulse generator 35. The 100 μS pulse is fed to a fail alarm gate 36 which enables onward transmission of the firing pulse only if no fault signal is present on its input 37 from a fail signal generator 38 which detects various failure conditions during operation of the apparatus. The signal from gate 36 is then fed *via* a suitable buffer circuit 39 to the firing electrode 12 of switch 6. Thus the higher the value of C, the later in each half cycle of the mains voltage supply is the switch 6 fired and, hence, the less energy is supplied to motor 1.

The values of the acceleration and error terms in the above-described control loop are relatively small. There are several reasons for this. Firstly the loop is controlled in every half cycle of the main supply, e.g. at least one hundred times a second, whereas it is desirable that several seconds are taken to change from one speed to another in order to avoid jerking of the drum. Thus the number of progressive control changes is large and, therefore, each can be relatively small. Secondly, the smaller the change in C between successive cycles, the smoother the transition from one speed to another. Thirdly, the lower the numbers concerned, the less time is occupied for the necessary computations at the beginning of each half cycle. In this connection it is to be noted that the 1 mS maximum period taken for the computation is a "dead" period as far as the firing angle control is concerned. This is because the motor current lags the applied voltage by about this amount in a typical case and, therefore, there is no point in firing the switch before the current can rise in the circuit. Also, of course, there would be no point in firing the switch until the voltage across it has risen to a value sufficient to maintain it in the conducting state when the firing pulse is finished. Further, the firing pulse should not be too early in the cycle because the switch is not fully switched of until a short time following a mains zero crossing and it is not desirable to fire the switch before it comes out of conduction because the effect of the control loop would be lost in the early stages.

A "dead" period of 1 mS is sufficient for these purposes and, since this period occupies 40 count steps of counter 32, the minimum usable count value of counter 29 is 40. Similarly, at the end of each half cycle of the mains supply frequency, the slope of the sinewave is so steep that substantially no power would be fed to motor 1 if thyristor 12 were fired right at the extreme end the half cycle. Thus the maximum permissible value for counter 29 may be set at, for example, 390.

In order to ensure that counter 25 stays within these limits (40 to 390), an end stop decoder 41, which may be for example be an autocorrelator, correlates the count value in the counter with the fixed end stop values of 40 and 390 stored in a read only memory forming part of decoder 41 and gives an output signal if either count value is detected. This output signal is used to inhibit the operation of decoder 28 which, in turn, cuts off the count enable pulse CEN3 and hence prevents counter 29 from counting beyond the 40 and 390 limiting count values.

If the control arrangement is operating to maintain the motor speed constant and, for example, the speed decreases slightly for any reason, then the value of PM increases and the acceleration and error terms both decrease. Thus the firing angle is reduced and therefore more energy is applied to the motor to restore its speed. The values of the terms given in Tables I and II were chosen *inter alia* to give a very smooth speed control when maintaining the speed constant at any given target speed. As explained above, the actual values depend on several factors which include the motor characteristics. If the values are too large, then the motor tends to hunt to each side of the target speed in what is generally referred to in the art as a "lively" manner. If the values are too small then the control loop becomes too slow in action. Also, the relationship between the values of the two functions is important, the acceleration function having a larger range of values.

If a command is received to change the speed from, for example, Out of balance test speed (PT=37) to Spin 1 speed (PT=96), then the Spin 1 PT value (96 from Table I) is loaded into ROM 22 but this value cannot be loaded into counter 23 until the next PL pulse is derived from the tachogenerator 9. Simultaneously, the division factor of divider 14 is altered from unity to 16 (Table I). Thus, the next PL pulse will be delayed by 16 periods of the tachogenerator 9; i.e. the effective tachogenerator period count would then be 37×16=592 and this results in seven-bit down-counter 23 counting downwards to its maximum negative value. Hence the value of (PT−PM) in store 24 also has the maximum negative value. The error term will have its maximum negative value for quite a few cycles whilst the drum speed is increasing—in fact until the value of PM is 93. Meanwhile, the first acceleration term would also have had its maximum negative value since down-counter counted from +37 to its maximum negative value of −127 in response to the 592 input pulses from CP1. This only happens the once during a speed change, however, and is of no significance. In the next PL counting period, the up and down counts of counters 15 and 16 respectively reach their maximum and, hence, PM'=PM and (PM'−PM)=0. This continues until the value of PM comes within range of the counters, i.e. 127.

Up to this point, therefore, only the error term (=4) causes the speed increase and this gives a smooth

8

but rapid speed increase. When the value of PM falls to 127 or below, the acceleration term comes into effect and assumes normal control. In this case, it will tend to oppose, but not overwhelm, the error term and will therefore slow up the acceleration in a controlled manner. This slowing up effect gives a smooth acceleration curve up to the required level because the acceleration is smoothly reduced to zero at the required drum speed.

It can readily be appreciated that a similarly smooth control will be provided by the arrangement when changing the drum speed from any speed to other target speeds and that this smoothness is achieved by controlling the energy supplied to the motor in dependence upon a function of the target speed and also on a function of the acceleration.

Instead of having predetermined fixed spin (or other) speeds, a variable speed control may additionally or alternatively be provided by a manually adjustable potentiometer 10 which can be adjusted to provide any voltage between zero and a reference voltage Vref to the input of an analogue-to-digital converter 20. The digital output of converter 20 is fed to the input of ROM 22 to control the PT value of the output of ROM 22 in the same manner as ROM 21.

The foregoing description describes the basic operation of the control loop when going from one speed to another. In practice, however, before starting to increase speed from any speed (including zero) to a spin speed, it is first desirable to go through the distribute cycle as explained above. If the clothes are unevenly distributed when the drum speed is being increased to a spin speed, any out of balance of the drum caused by the uneven distribution can cause excessive vibration of the drum and result in serious damage to the washing machine. For this reason, if the distribute cycle is not selected manually, it is automatically generated when the drum speed is required to be increased to a spin speed.

In the distribute (D) cycle, the drum speed is steadily increased from a wash speed to a sufficient speed for the centrifugal force to balance gravity and hold the clothes against the drum. This given speed is typically in the range 75 to 85 r.p.m. for domestic washing machines and in the embodiment given in Table I the target period PT for a given speed of 82 r.p.m. is 37.

When going from a wash speed, e.g. with a target period PT=58, to the given speed (e.g. PT=37), the target period is decremented one step at a time at regular intervals. The time intervals are fixed in dependence upon the required total period for the change from one speed to the other and upon the difference between the Wash and "given" PT values—i.e. 58−37=21. This slow change of the speed with respect to time is referred to in the art as the distribute ramp.

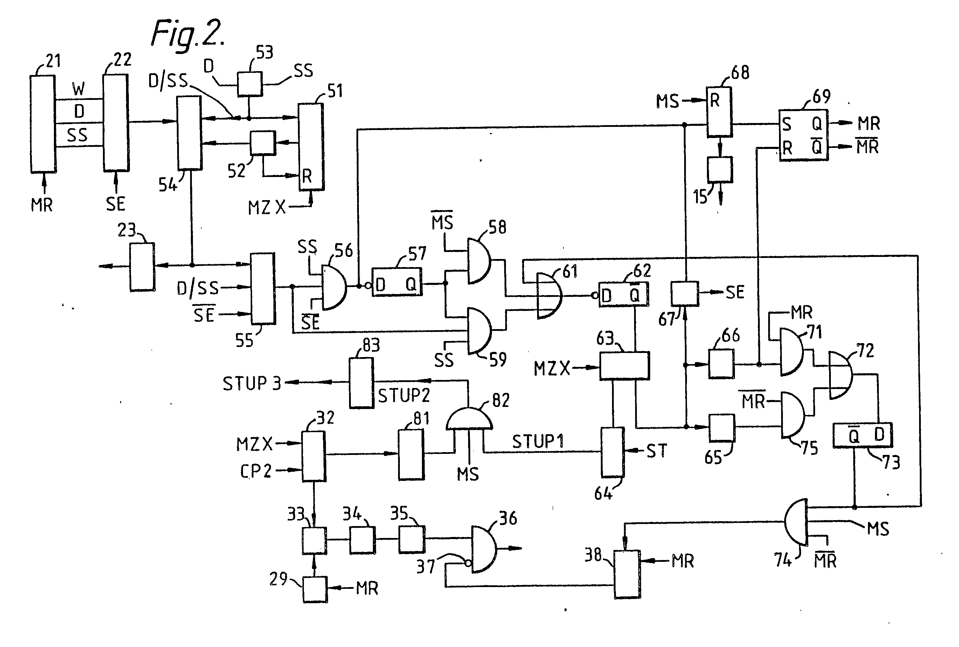

The way in which the distribute ramp is provided will now be described with reference to Figure 2, in which items common to Figures 1 and 2 are given the same reference numerals.

The unit decrements are each controlled with respect to time by an 8-bit counter 51 which counts mains frequency zero crossings MZX up to its maximum capacity which, at a mains frequency of 50 Hz, amounts to a full count period of 2.55 seconds. This period is the maximum possible duration of the ramp and is longer than would normally be required for each unit decrement of the target speed. The actual period of each unit step is therefore determined by an 8-bit step decoder 52 which holds an 8-bit code corresponding to the count value in counter 51 that provides the required step time. Counter 51 starts counting on receipt of a D or SS command from a control gate 53. Each time it reaches the count value in decoder 52 the latter provides an output pulse and resets the counter 51. Alternatively counter 51 could be a ring counter which cyclically counts to the required value and then starts again.

Each decrementing pulse is used to decrement a down-counter 54 inserted in series between the second ROM 22 and the (PT−PM) down counter 23. This additional down counter is not shown in Figure 1 since it is only used as a counter when a distribute ramp is required. In all other cases its counting action is inhibited by the control gate 53 since no D or SS signal is present. Thus in all other cases it passes the input number from ROM 22 direct to down-counter 23. Thus during a distribute cycle, counter 54 counts down in unit steps of controlled duration from the Wash speed target period (58) to the given speed target period (37). These changes cause a corresponding change in the firing angle in the manner described earlier above.

When the counter 54 reaches the required given target speed (PT=37), this value is correlated with the same value (37) in a correlator 55 which gives a "ramp completed" output signal. Correlator 55 is also enabled by the D/SS signal from control gate 53. For the purposes of the following explanation, only the wash (W), given (D), and spin (SS) speeds are relevant and only these are shown as the command signals from ROM 21 to ROM 22.

The output signal of correlator 55 would normally be used to switch the washing machine to the spin cycle. However it is used here to start an out of balance (hereinafter referred to as OOB) test which carries out a test cycle capable of detecting any material OOB before allowing the spin cycle to be started. If an OOB condition is detected within a given period (for example two seconds), then the machine is stopped (in order to allow the clothes to fall to the lower part of the drum) and then a further distribute cycle is given followed by a further OOB test cycle. This OOB test not only has the advantage that it protects the washing machine from damage by OOB loads but also has the advantage that it may permit simplification of the drum suspensions since less onerous conditions are imposed thereon.

In order to initiate the OOB test, the "end of ramp" signal from correlator 55 enables an AND-gate 56, the SS signal being present but a "spin enable" signal SE is not present (and $\overline{SE}$=1) since the spin cycle cannot yet be commenced. The output of gate 56 is fed to an inverting D input of a delay flip-flop 57 clocked at the 40 kHz rate—the clock inputs of the various delay flip-flops not being shown in the Figure. The Q output of flip-flop 57 goes to a "0" at the next clock pulse and this "0" signal inhibits two AND-gates 58 and 59 with the result that the output of a combining OR-gate 61 is also "0". This "0" signal at an inverting D input of a further delay flip-flop 62 causes the $\bar{Q}$ output thereof to go to "0" and hence remove the previously existing "1" at the reset input of a mains zero crossing counter 63 fed with mains zero crossing pulses MZX. Counter 63 is therefore enabled and starts to count up. The count state of counter 63 is monitored by four correlators 64, 65, 66, and 67 each of which gives a change in its output signal when the count state in the counter reaches the respective values preset in the correlators. The function of these correlators will be described later below.

If the drum still has an OOB load despite the distribute cycle, then it will not be rotating at the fixed given speed (PT=37) but will have a cyclically changing speed. If this speed changes by more than 5%, for example by 10% from the required given speed, then this is indicative of a possibly dangerous OOB condition. This condition will cause the PM count in PM up-counter 15 (also Figure 1) to increase to, say, PM=41. This value 41 is preset in an OOB correlator 68 which is in the enabled state due to the enabling input from gate 56 and due to the fact that an MS (motor stopped) signal on the reset input is at "0" due to the fact that the motor is still running. This output signal signifies an OOB test fail condition and is used to set a set-reset flip-flop 69 to give a "1" at its Q output—this output forming a machine reset signal MR.

It is to be noted that this test, as will be explained below, has a limited time period and it is assumed that the OOB has been detected within this time period.

The reset signal MR resets the firing angle counter 29 (also see Figure 1), enables an AND-gate 71, inhibits an AND-gate 75, and via the fail decoder gate 38 inhibits AND-gate 36 at its inverting input 37 so that no firing pulses can be forwarded to switch 6. The motor is therefore stopped. The MR signal appearing at an input of ROM 21 forces the Wash command W to be fed to ROM 22. Thus the command signals SS and D are removed and the circuits which control the distribute ramp and the OOB test cycle are inhibited.

The motor has been stopped to allow the clothes to fall in the stationary drum so that they can rearrange themselves during a following distribute cycle. The tachogenerator 2 has a zero output voltage and this causes an MS (motor stopped) signal to be given in a manner not shown. This MS signal *inter alia* resets the OOB fail correlator 68 and inhibits gate 58 with the result that a "0" appears at the outputs of gate 61 and flip-flop 62 are "0" and, therefore, the reset input to counter 63 is removed. Thus the latter recommences its count cycle. When it reaches 200, for example, which gives a waiting time of 2 seconds during which the motor remains stopped to allow the clothes to fall, correlator 66 responds to this count value preset therein. Its "1" output enables gate 71 and, via an OR-gate 72, a delay flip-flop 73, the OR-gate 61 and flip-flop 62, routes the "1" to the reset input of counter 63 and holds the counter reset at zero count. The "1" output of correlator 66 also resets flip-flop 69 and, hence, removes the MR signal. With the MR signal removed, the firing pulses are again fed to the switch 6 and the motor is restarted. This, in turn, removes the signal MS and the control loop now operates to bring the motor up to the wash speed and then to the given speed, after which the OOB test is repeated.

It will now be assumed that the clothes have been evenly distributed in such a manner that the OOB test does not fail. At the end of the distribute ramp, correlator 55 is enabled and, as a result, a "test time complete" correlator 67 is prepared and counter 63 starts counting. This time the OOB test is passed and therefore the counter continues to count until it reaches 200 (i.e. 2 seconds at 50 Hz), whereupon correlator 67 is enabled and gives a "spin enable" output signal SE to enable the spin cycle to commence. This SE signal appearing at a control input to ROM 22 now allows the latter to provide the spin PT value at its output, this value then being loaded directly into down counter 23 via down counter 54 which now acts merely as a buffer and has no effect on the operation.

Thus, having checked that there is no dangerous OOB, the arrangement now proceeds with the spin cycle in the manner previously described with reference to Figure 1.

If, for any reason, the motor fails to start or stalls (e.g. due to excessive overload), the MS signal is generated. The $\overline{MS}=0$ signal input disables gate 58 and, as a result via OR-gate 61, counter 63 is enabled to start counting. When it reaches its maximum count (9 bits at 50 Hz gives 2.55 seconds), stall-time correlator 65 is enabled. Since $\overline{MR}=1$, AND-gate 75 goes to "1", and the $\bar{Q}$ output of flip flop 73 goes to "1" at the next clock pulse. Since both MS and $\overline{MR}=1$, an AND-gate 74 is enabled and this, in turn, causes the fail decoder 38 to stop the feed of firing pulses to switch 6. Thus the power feed to the motor is stopped a little over 2-1/2 seconds after the motor stops for any reason, thus providing a very important safety feature under fault conditions. Further gates, not shown, are arranged such that the system can only be reset to normal by switching off the mains supply to the washing machine.

When the motor is initially switched on, the firing angle is such that substantially no power is fed to the motor in the first half cycle. The control loop decrements the firing angle count at the rate of about 2 counts (0.9° of conduction) in each half cycle (10 ms) period and the conduction angle slowly increases until the system measures the desired acceleration rate towards the target speed.

It has been found that this gives a somewhat long time delay and noise from the motor in the period before it builds up sufficient torque to start. A faster start up system has therefore been provided in which the conduction angle is increased at a faster rate than normal control just for the few cycles of the mains frequency whilst the motor is building up the starting torque.

The start up sequence consists of decreasing the firing angle by X° in each half cycle for N cycles and then activating the normal loop control in order to allow the acceleration term to dampen the response. Typically, X=9° or 18° and N=4.

The operation of the circuit is as follows. When the mains ON switch is operated, a d.c. power supply is provided for the logic circuits and the motor stopped signal MS is provided until the motor has started and the tachogenerator has reached a given minimum output voltage.

The $\overline{MS}$=0 input to gate 58 causes a "0" to be applied to the reset input of counter 63 which, therefore, starts counting the zero crossings MZX. When the start up cycle is commenced, a start up enable signal ST is fed to the enable input of correlator 64 which accordingly provides a start up period output STUP1. When the counter 63 has counted a predetermined number (for example 8) of the MZX crossings, correlator 64 detects this count value and resets. Thus the correlator 64 provides a signal STUP1 which lasts for the start up period, of say 4 mains cycles, determined by correlator 64.

Firing angle counter 29 is initially reset to its maximum permissible firing angle and counts down by a number which is defined by the length of the pulse CEN3 as previously described.

Up counter 32 counts upwards from zero at each mains crossing. A count value decoder 81 sets when the count value is zero and resets when the count value reaches 10 counts of the 40 kHz clock input CP2. During this period, an AND-gate 82 is enabled due to the "1" signal on each of its inputs (MS=1) during the start up period. Thus an output signal STUP2 is provided to a latch 83 for the period of the ten 40 kHz pulses. The output STUP3 of latch 83 overrides the LAP and LEP control inputs to decoder 28 (see Figure 1) and causes the latter to provide a CEN3 signal for the period of the ten 40 kHz pulses. During this CEN3 period the firing angle counter 29 therefore counts twenty pulses at the 80 kHz rate as described above and the firing angle counter is therefore decremented by 20 (9° angle).

Since the control of the firing angle counter is taken over by latch 83, signal STUP3 is also used to disable the all-zero's detector 31 and error counter 25 via a respective inhibit input (not shown) on each.

Thus at each mains zero crossing, the firing angle is decremented by 20 counts for the total number of mains frequency cycles determined by correlator 64. At the end of this period, correlator 64 removes the STUP1 signal and the firing angle control loop reverts to normal operation. The number of mains cycles occupied by the start up period is chosen so that the motor is just starting at the end of the period and the MS signal therefore reverts to "0".

## Claims

1. A motor speed control arrangement for a washing machine of the type having a laundry drum which is rotatable about a substantially horizontal axis by an electric motor which is provided with a tachogenerator having an a.c. output signal which is proportional to the speed of the motor and, hence, of the drum; the arrangement being arranged for connection to said motor and tachogenerator to form a speed control loop whereby the motor speed may be automatically brought to a wash speed at which the laundry articles may be washed and then to a higher (spin) speed at which the articles may be at least partially spin-dried, the control arrangement being provided with means for causing the motor to drive the drum relatively slowly through an intermediate distribute speed range to enable the articles to be distributed evenly around the drum to a given speed at which the articles have become retained in a substantially fixed position relative to the drum by centrifugal force before the control arrangement causes the motor speed to increase to the required spin speed, characterised in that the arrangement includes means for maintaining said given speed for a given period, for monitoring the actual motor speed, as represented by the tachogenerator output signal, during this period and for giving an output signal if the tachogenerator output signal reveals that the motor speed changes during this period by more than a predetermined amount, which change in speed is indicative of an unbalanced distribution of the laundry articles around the drum.

2. A control arrangement as claimed in Claim 1, characterised in that the arrangement further includes means responsive to said output signal to cause the motor to reduce its speed at least to the wash speed, then to pass through the intermediate speed range to the given speed, and then to repeat the monitoring operation to check that the articles are sufficiently evenly distributed around the drum to proceed to the spin speed.

3. A control arrangement as claimed in either previous claim, so arranged that, if a said output signal is given, the motor is stopped for a time sufficient for the articles to fall to the lowest portion of the drum before the motor speed is increased again to the wash speed and then through the intermediate speed range.

4. A control arrangement as claimed in any previous claim wherein the said predetermined amount is a speed change of more than 5%.

5. A method of controlling the motor speed of a washing machine of the type having a laundry drum which is rotatable about a substantially horizontal axis by said motor which is provided with a tachogenerator having an output signal which is proportional to the speed of the motor and, hence, of the drum, a speed control arrangement being connected to said motor and tachogenerator to form a speed control loop whereby the motor speed may be automatically brought to a wash speed at which laundry articles in the drum may be washed and then to a higher (spin) speed at which the articles may be at least partially spin-dried, the method including the steps of driving the motor relatively slowly from the wash speed through an intermediate distribute speed range to enable the articles to be distributed relatively evenly around the drum to a given speed at which the articles have become retained in a substantially fixed position relative to the drum by centrifugal force and subsequently increasing the motor speed to the spin speed, characterised in that the method further includes the steps of maintaining the motor speed at said given speed for a given period, monitoring the motor speed, as represented by the tachogenerator output signal, during this period, detecting whether the tachogenerator output signal reveals that the motor speed changes during this period by a given amount representative of unevenly distributed articles around the drum, and preventing the motor from increasing its speed to the spin speed if such a motor speed change is detected.

6. A method as claimed in Claim 5, further including the steps of reducing the motor speed to zero, for a time sufficient for the articles to drop in the drum, if a said change in speed is detected during the monitoring period, increasing the motor speed through the intermediate speed range again, and then repeating the monitoring and detecting steps.

**Patentansprüche**

1. Anordnung zur Steuerung der Trommeldrehzahl einer Waschmaschine mit im wesentlichen horizontal gelagerter Waschtrommel, deren Antriebsmotor mit einem Tachogenerator mit einem Wechselspannungsausgangssignal versehen ist, das der Motorgeschwindigkeit und daher der Trommelgeschwindigkeit proportional ist, wobei die Anordnung derart mit dem Motor und mit dem Tachogenerator verbindbar ist, dass sich dabei eine Geschwindigkeitssteuerschleife bildet, mit der die Motorgeschwindigkeit automatisch auf eine Waschgeschwindigkeit, bei der die Wäsche gewaschen werden kann, und anschliessend auf eine höhere (Schleuder-) Geschwindigkeit gebracht werden kann, bei der die Wäsche zumindest teilweise trockengeschleudert wird, wobei die Steuranordnung mit Mitteln ausgerüstet ist, die den Motor der Trommel verhältnismässig langsam durch einen Verteilungsgeschwindigkeits-Zwischenbereich antreiben lassen, um der Wäsche die Möglichkeit zu geben, sich bei einer gegebenen Geschwindigkeit gleichmässig über die Trommel zu verteilen, wobei bei dieser gegebenen Geschwindigkeit sich die Wäsche in einer im wesentlichen festen Position in bezug auf die Trommel durch Zentrifugalkraft fixiert, bevor die Steueranordnung die Motorgeschwindigkeit auf die erforderliche Schleudergeschwindigkeit erhöht, dadurch gekennzeichnet, dass die Anordnung Mittel zum Aufrechterhalten dieser gegebenen Geschwindigkeit für einen gegebenen Zeitraum, zur Messung der momentanen vom Tachogeneratorausgangssignal dargestellten Motorgeschwindigkeit in diesem Zeitraum und zum Ausgeben eines Ausgangssignals enthält, wenn das Tachogeneratorausgangssignal angibt, dass sich die Motorgeschwindigkeit in diesem Zeitraum um mehr als einem vorgegebenen Betrag ändert, und diese Geschwindigkeitsänderung für eine unausgewuchtete Verteilung der Wäsche in der Trommel bezeichnend ist.

2. Steueranordnung nach Anspruch 1, dadurch gekennzeichnet, dass die Anordnung weiter Mittel zum Ansprechen auf das genannte Ausgangssignal zum Reduzieren der Motorgeschwindigkeit zumindest auf die Waschgeschwindigkeit und anschliessend zum Umschalten vom Zwischengeschwindigkeitsbereich auf die gegebene Geschwindigkeit und darauf zum Wiederholen der Steueroperation zur Prüfung enthält, dass sich die Wäsche ausreichend gleichmässig in der Trommel verteilt hat, um die Schleudergeschwindigkeit zu erreichen.

3. Steueranordnung nach einem oder mehreren der vorangehenden Ansprüche in derartiger Aufstellung, dass beim Ausgeben eines erwähnten Ausgangssignals der Motor für eine ausreichende Zeit gestoppt wird, in der die Wäsche zum niedrigsten Teil der Trommel fallen kann, bevor die Motorgeschwindigkeit wieder auf die Waschgeschwindigkeit und anschliessend über den Zwischengeschwindigkeitsbereich erhöht wird.

4. Steueranordnung nach einem oder mehreren der vorangehenden Ansprüche, dadurch gekennzeichnet, dass der erwähnte vorgegebene Betrag eine Geschwindigkeitsänderung von mehr als 5% darstellt.

5. Verfahren zur Steuerung der Motorgeschwindigkeit einer Waschmaschine mit im wesentlichen horizontal gelagerte Waschtrommel, deren Antreibsmotor mit einem Tachogenerator mit einem Ausgangssignal ausgerüstet ist, dass der Motorgeschwindigkeit und daher der Trommel geschwindigkeit proportional ist, wobei eine Geschwindigkeitssteueranordnung mit diesem Motor und diesem Tachogenerator zur Bildung einer Geschwindigkeitssteuerschleife verbunden ist, mit der die Motorgeschwindigkeit automatisch auf eine Wäschegeschwindigkeit, bei der Wäsche in der Trommel gewaschen werden kann, und anschliessend auf eine höhere (Schleuder-) Geschwindigkeit gebracht werden kann, bei der die Wäsche zumindest teilweise trockengeschleudert wird, wobei das Verfahren die Schritte zum relativ langsamen Hochlaufen des Motors aus der Waschgeschwindigkeit über einen Verteilungsgeschwindigkeits-Zwischenbereich enthält, damit sich die Wäsche verhältnismässig gleichmässig in der Trommel bei einer gegebenen Geschwindigkeit verteilen kann, bei der die Wäsche in einer im wesentlichen festen Position in bezug auf die Trommel durch Zentrifugalkraft fixiert ist, und darauf die Motorgeschwindigkeit auf die Schleudergeschwindigkeit erhöht wird, dadurch gekennzeichnet, dass das Verfahren weiter die Schritte zum Aufrechterhalten der Motorgeschwindigkeit bei dieser erwähnten gegebenen Geschwindigkeit für einen gegebenen Zeitraum, zur Steuerung der Motorgeschwindigkeit entsprechend des Ausgangssignals des Tachogenerators in diesem Zeitraum, zur Detektierung, wenn das Ausgangssignal des Tachogenerators angibt, dass sich die Motorgeschwindigkeit in diesem Zeitraum um einen gegebenen Betrag entsprechend ungleichmässig verteilter Wäsche in der Trommel ändert und zur Verhinderung der Erhohüng der Motorgeschwindigkeit auf die Schleudergeschwindigkeit enthält, wenn eine derartige Motorgeschwindigkeitsänderung detektiert wird.

6. Verfahren nach Anspruch 5, weiter noch mit den Schritten zum Reduzieren der Motorgeschwindigkeit auf Null in einem Zeitraum, die dazu ausreicht, dass die Wäsche in der Trommel herunterfällt, wenn eine erwähnte Geschwindigkeitsänderung im Steuerzeitraum detektiert wird, zum abermaligen Erhöhen der Motorgeschwindigkeit über den Geschwindigkeitszwischenbereich, und anschliessend zur Wiederholung der Steuerungs- und Detektierungsschritte enthält.

## Revendications

1. Système de régulation de la vitesse de rotation d'un moteur pour un lave-linge du type comportant un tambour à linge qui peut tourner autour d'un axe en substance horizontal à l'intervention d'un moteur électrique qui est équipé d'une génératrice tachymétrique produisant un signal de sortie en courant alternatif qui est proportionnel à la vitesse du moteur et, par conséquent, du tambour, le système étant destiné à être connecté au moteur et à la génératrice tachymétrique pour former une boucle de régulation de vitesse au moyen de laquelle la vitesse du moteur peut être amenée automatiquement à une vitesse de lavage à laquelle le linge peut être lavé, puis à une vitesse plus élevée (essorage) à laquelle le linge peut au moins être partiellement séché par essorage, le système de régulation étant pourvu de moyens pour amener le moteur à entraîner le tambour à une vitesse relativement lentement en passant par un secteur de vitesse de répartition intermédiaire en vue de permettre la répartition uniforme du linge sur le contour du tambour, jusqu'à une vitesse donnée à laquelle le linge est retenu dans une position en substance fixe par rapport au tambour par la force centrifuge avant que le système de régulation porte la vitesse du moteur à la vitesse d'essorage requise, caractérisé en ce que le système comprend des moyens pour maintenir la vitesse donnée pendant une période donnée, pour surveiller la vitesse réelle du moteur, représentée par le signal de sortie de la génératrice tachymétrique, pendant cette période et pour produire un signal de sortie si le signal de sortie de la génératrice tachymètrique montre que la vitesse du moteur varie pendant cette période de plus d'une valeur prédéterminée, cette variation de vitesse indiquant une répartition non équilibrée du. linge sur le contour du tambour.

2. Système de régulation suivant la revendication 1, caractérisé en ce qu'il comprend, en outre, un moyen réagissant au signal de sortie pour amener le moteur à réduire sa vitesse au moins jusqu'à la vitesse de lavage, puis à passer par le secteur de vitesse intermédiaire à la vitesse donnée, puis pour répéter l'opération de surveillance en vue de vérifier si le linge est réparti d'une manière suffisamment uniforme sur le contour du tambour pour passer à la vitesse d'essorage.

3. Système de régulation suivant l'une ou l'autre des revendications précédentes, conçu d'une manière telle que si un signal de sortie est émis, le moteur soit arrêté pendant un laps de temps suffisant pour que le linge tombe dans la partie inférieure du tambour avant que la vitesse du moteur soit à nouveau accrue jusqu'à la vitesse de lavage et passe ensuite par le secteur de vitesse intermédiaire.

4. Système de régulation suivant l'une quelconque des revendications précédentes, dans lequel la valeur prédéterminée est une variation de vitesse de plus de 5%.

5. Procédé de régulation de la vitesse du moteur d'un lave-linge du type comportant un tambour à linge qui peut tourner autour d'un axe en substance horizontal a l'intervention du moteur qui est pourvu d'une génératrice tachymétrique produisant un signal de sortie proportionnel à la vitesse du moteur et, par conséquent, du tambour, un système de régulation de vitesse étant connecté au moteur et à la génératrice tachymètrique pour former une boucle de régulation de vitesse au moyen de laquelle la vitesse du moteur peut être amenée automatiquement à une vitesse de lavage à laquelle le linge contenu dans le tambour peut être lavé, puis à une vitesse plus élevée (d'essorage) à laquelle le linge peut être au moins partiellement séché par essorage, le procédé consistant à entraîner le moteur relativement lentement à partir de la vitesse de lavage par un intervalle de vitesse de répartition intermédiaire afin de permettre au linge de se répartir d'une manière relativement uniforme sur le contour du tambour, jusqu'à une vitesse donnée à laquelle le linge est retenu dans une position en substance fixe par rapport au tambour par la force centrifuge, et à augmenter ultérieurement la vitesse du moteur jusqu'à la vitesse d'essorage, caractérisé en ce que le procédé consiste en outre à maintenir la vitesse du moteur à la vitesse de répartition pendant une période donnée, à surveiller la vitesse du moteur, qui est représenté par le signal de sortie de la génératrice tachymétrique, pendant cette période, à détecter si le signal de sortie de la génératrice tachymétrique montre que la vitesse du moteur varie pendant cette période dans une mesure donnée représentative d'une répartition non uniforme du linge sur le contour du tambour, et à empêcher le moteur d'accélérer jusqu'à la vitesse d'essorage si une telle variation de la vitesse du moteur est détectée.

6. Procédé suivant la revendication 5, suivant lequel on réduit également la vitesse du moteur à zéro pendant un laps de temps suffisant pour que le linge tombe dans le tambour si une telle variation de vitesse est détectée pendant la période de surveillance, un augmente la vitesse du moteur à nouveau en passant par le secteur de vitesse intermédiaire, puis on répète les opérations de surveillance et de détection.

Fig. 1.

Fig.2.